# EUROPEAN PATENT APPLICATION

(11) **EP 2 587 096 A1**
(43) Date of publication of application: **01.05.2013**
(21) Application number: 11460053.9
(22) Date of filing: 31.10.2011
(51) Int. Cl.: F16H 61/18, F16H 61/24, F16H 61/70

(54) **A transmission protection system and an electronic transmission control unit for the transmission protection system**

(71) Applicant: Eaton Truck Components Sp. z.o.o., 83-110 Tczew (PL)
(72) Inventor: Michalski, Przemyslaw, 80-216 Gdansk (PL); Wulnikowski, Leszek, 83-200 Starogard Gdanski (PL); Kopylowicz, Filip, 83-110 Tczew (PL); Ott, Zenon, 83-110 Tczew (PL)
(74) Representative: Budzinski, Slawomir

(57) **Abstract**

The subject of the invention provides a transmission protection system (1) for motor vehicles equipped with low range of ratios and high range of ratios, comprising a device for shifting gears LCR (2) operating in "H" letter array. Selection of gear is effected by means of the gear selection shaft (5) connected with the gear change lever (3) equipped with the preselective switch (4) to select low or high range of ratios, and the low range of ratios is equipped with at least four ratios 1, 2, 3, 4 and the high range of ratios is equipped with at least four ratios 5, 6, 7 and 8, the transmission being equipped with pneumatic installation used to select the ratios range by means of the preselective switch and vehicle speed sensor (6).

The gear selection shaft (5) is connected to an electro-pneumatic actuator EPV acting axially on the gear selection shaft (5) so that it counteracts accidental positioning of the gear selection shaft (5) in position of the gears 1-2 within the low range of ratios or in position of the gears 5-6 within the high range of ratios, and the electro-pneumatic actuator EPV is controlled by means of the electronic transmission control unit TCU depending on the difference between the vehicle speed Sᵥ and the first assumed speed S₁ for the low range of ratios of the difference between the vehicle speed Sᵥ and the second assumed speed S₂ for the high range of ratios.

## Description

### Field of the invention

The invention relates to the transmission protection system and electronic transmission control unit for the transmission protection system, used in the drivetrain of motor vehicle. In particular, the invention relates to such transmission which has two ranges of ratio implemented using the additional transmission located in series behind the main transmission equipped with cylindrical gears, wherein at least part of the gears shifting process is realised by means of pneumatic installation using suitable electronically-controlled pneumatic actuators.

### Prior art

The gear transmissions such as for example TRSM0060 gear from Eaton, which is 9-gear transmission used in motor vehicles, are known. This transmission is equipped with front module executing basic ratios via cylindrical gears. The front module comprises a set of four ratios plus crawl and reverse gear. The front module is connected with the rear module, which is a two-gear planetary transmission. Such transmission provides eight basic ratios for driving forwards as well as reverse and crawl gear, 4 lower gears for driving forwards being provided taking into account lower (reducing) ratio of the planetary transmission and the four higher gear for driving forwards are provided with the direct ratio of the planetary transmission (ratio 1: 1). Crawl and reverse gear are provided taking into account lower ratio of the planetary gear.

Within the scope of the front module, the transmission is controlled by means of a device for shifting the gears housed in the transmission casing and equipped with gear selection shaft. This transmission operates in a typical, known "H" arrangement, that consists in that when in neutral position, the selection shaft moves between the position of individual pairs of gears, that are arranged in "H" letter shape. The selection shaft is controlled by means of a gear change lever operated by driver. Preselective switch enabling selection of ratio range is connected to the gear change lever and enables to select low range of ratios or high range of ratios by selecting one of two ratios of the planetary transmission in the rear module. Selection of one of these ranges can be performed using pneumatic system of motor vehicle in which the transmission is installed. The transmission is equipped with properly calibrated sensor that enables measurement of vehicle speed. Data from this and other sensors can be transmitted to the electronic controller.

From the description of European application EP 1941186, a solution concerning a device for shifting gears in mechanical transmission with a system of transmission ranges and lever providing the gears shifting arrangement in "H" letter array is known, wherein the device for shifting the gears and selection shaft are functionally connected with one end to the lever and with the other to the transmission from the side of moving towards the locking device, that can be activated using pressure of suitable medium, and that prevents or at least warns driver of a motor vehicle about unintentional selection of change of the range group in the transmission, in a manner that passage and selector of shaft, in case of changing the range group, can be moved independently from shifting the position (G5-G6) to the shaft position (G3-G4) from two successive gears to the lowest one (G3, G4).

Said device for shifting gears is designed so that to avoid unwanted changes in case of change of the range group and to enable reduction of gears within a few stages in a manner that changes of the selection shaft position can be moved from one position of the selection shaft (G5-G6) to other position of the selection shaft position (G3-G4) of the following lower gear with different force (F1 to F2) which changes during shifting.

In this solution, gear change lever is equipped with gear range selection switch that is electrically connected with the electronic control unit. The transmission casing houses pneumatic actuator and the change of force on the selection shaft is provided by a cam connected with the constant force pneumatic actuator. Cam is seated on an axle in the transmission casing and transfers pneumatic actuator force changing its direction at right angle. Cam profile causing its cooperation on variable arm causes the change of force on the selection shaft at constant force of the pneumatic actuator.

Up to now, most of mechanical transmissions haven't comprised efficient system for protection against accidental attempt to engage too low ratio. The solution presented in EP 1941186 is complicated, does not fulfil all expected functionalities and makes the transversal dimension of the transmission larger.

### Summary of the principle of invention

The purpose of the present invention is to develop a transmission protection system in the drivetrain of a motor vehicle, such as the one presented in the preamble of the first claim, that at the same time eliminates drawbacks of the prior art.

Another purpose of the invention is to develop an electronic transmission control unit for the transmission protection system in the drivetrain of a motor vehicle, such as the one presented in the preamble of the sixth claim, that at the same time eliminates drawbacks of the prior art.

The transmission protection system for motor vehicles, according to the invention, is related to mechanical transmission equipped with low range of ratios and high range of ratios, comprising a device for shifting gears LCR operating in "H" letter array. The selection of gear is realised by means of the gear selection shaft connected with the gear change lever equipped with the preselective switch to select low or high range of ratios.

Low range of ratios comprises at least four ratios 1, 2, 3, 4 and high range of ratios also comprises at least four ratios 5, 6, 7 and 8.

The transmission is equipped with pneumatic installation used to select the ratios range by means of the preselective switch. The transmission also comprises the vehicle speed sensor.

The gear selection shaft is connected with the electro-pneumatic actuator EPV acting axially on the gear selection shaft in such a manner, that it counteracts accidental positioning of the gear selection shaft in position of the gears 1-2 within the low range of ratios or in position of the gears 5-6 within the high range of ratios, and the electro-pneumatic actuator EPV is controlled by means of the electronic transmission control unit TCU.

The electronic transmission control unit TCU collects the information from the vehicle speed sensor and is programmed with data concerning the first assumed speed S₁ and the second assumed speed S₂ as well as the assumed speed S_{z}. Depending on the difference between the vehicle speed Sᵥ and the first assumed speed S₁ in case of the low range of ratios or difference between the vehicle speed Sᵥ and the second assumed speed S₂ in case of the high range of ratios, the electronic transmission control unit TCU controls the position of the electro-pneumatic actuator EPV.

Preferably, the transmission is equipped with a valve for blocking the change of range IAS that is controlled, depending on the position of the preselective switch (4) selecting the low or high range of ratios, by means of the electric transmission control unit TCU depending on the difference between the vehicle speed Sᵥ and the assumed speed S_{z}.

The electro-pneumatic actuator EPV comprising the piston housed in the casing of the electro-pneumatic actuator EPV is seated in the electro-pneumatic actuator casing, which is connected with the gear selection shaft of the gear shifting device LCR of the transmission.

Preferably, the gear selection shaft from the side of the electro-pneumatic actuator EPV has substantially smaller diameter, and within this section of the gear selection shaft of smaller diameter, damper spring is seated. This spring provides resistance during movement of the gear change lever when selecting the plane of gears under normal conditions.

Preferably, on the wider section of the gear selection shaft, there are circlips installed and between the circlips, the following elements are installed: from the side of the electro-pneumatic actuator EPV, sliding spring cup and from the side of transmission, auxiliary spring cup, between the sliding spring cup and auxiliary spring cup the main spring being installed, the sliding spring cup and auxiliary spring cup limiting the movement of the gear selection shaft along the electro-pneumatic actuator EPV. System of all these elements determines the geometrical conditions of movement of the gear selection shaft.

The electronic transmission control unit TCU for the transmission protection system for motor vehicles, according to the invention, wherein the transmission is equipped with low range of ratios and high range of ratios and comprises the device for shifting the gears operating in "H" letter array, wherein the selection of gear is realised by means of the gear selection shaft connected with the gear change lever. The gear change lever is equipped with the preselective switch to select low or high range of ratios.

The low range of ratios comprises at least four ratios 1, 2, 3, 4 and the high range of ratios comprises at least four ratios 5, 6, 7 and 8. The transmission is equipped with pneumatic installation used to select the range of ratios by means of the preselective switch. The transmission is also equipped with the vehicle speed sensor.

The transmission control unit TCU is connected with the vehicle speed sensor and the transmission is equipped with the electro-pneumatic actuator EPV acting axially on the gear selection shaft of the device for shifting the gears LRC. The position of the electro-pneumatic actuator EPV is controlled by means of the electronic transmission control unit TCU depending on the difference between the vehicle speed Sᵥ and the first assumed speed S₁ for the low range of ratios or the difference between the vehicle speed Sᵥ and the second assumed speed S₂ for the high range of ratios.

Preferably, the transmission is equipped with a position sensor of the preselective switch for selecting low or high range of ratios, the transmission control unit TCU being connected with the position sensor of the preselective switch, and depending on the position of such switch and the difference between the vehicle speed Sᵥ and the first assumed speed S₁ controls the position of the electro-pneumatic actuator EPV.

The transmission control unit TCU is preferably connected with a sound signalling device and/or light signalling device, that is activated in case of selecting a ratio for the vehicle speed Sᵥ that exceeds the first assumed speed S_{z}.

Preferably, transmission is equipped with a valve for blocking the change of range IAS and the transmission control unit TCU controls the valve for blocking the change of range IAS depending on the signals received from the sensor of the preselective switch and on the difference between the vehicle speed Sᵥ and the assumed speed S_{z}.

Also preferably, transmission control unit TCU is connected with the gear range switch sensor, idle gear sensor and reverse gear sensor and displays a signal about current position of the gear range or idle gear or neutral position on dashboard of a vehicle.

### Brief description of figures

The description will be explained in more detail below with reference to the figures, wherein there is shown an example of operation of the transmission protection system with an electronic control unit, according to the invention. Among the figures:
Figure 1 is a diagram of the exemplary drivetrain, equipped with the transmission protection system for motor vehicles with electronic transmission control unit;
Figure 2 represents axial section of the electro-pneumatic actuator EPV and partially the device for shifting the gears LRC;
Figure 3 represents perspective view of the electro-pneumatic actuator EPV with partially broken-out section of the device for shifting the gears LRC;
Figure 4 represents diagram of operation within low range of ratios under normal conditions for Sᵥ lower than S₁;
Figure 5 represents diagram of operation within low range of ratios under abnormal conditions for Sᵥ higher than S₁;
Figure 6 represents diagram of operation within high range of ratios under normal conditions for Sᵥ lower than S₂;
Figure 7 represents diagram of operation within high range of ratios under abnormal conditions for Sᵥ higher than S₂;
Figure 8 represents diagram of operation during switching from high range of ratios under abnormal conditions for Sᵥ higher than S₁.

### Detailed description of the figures

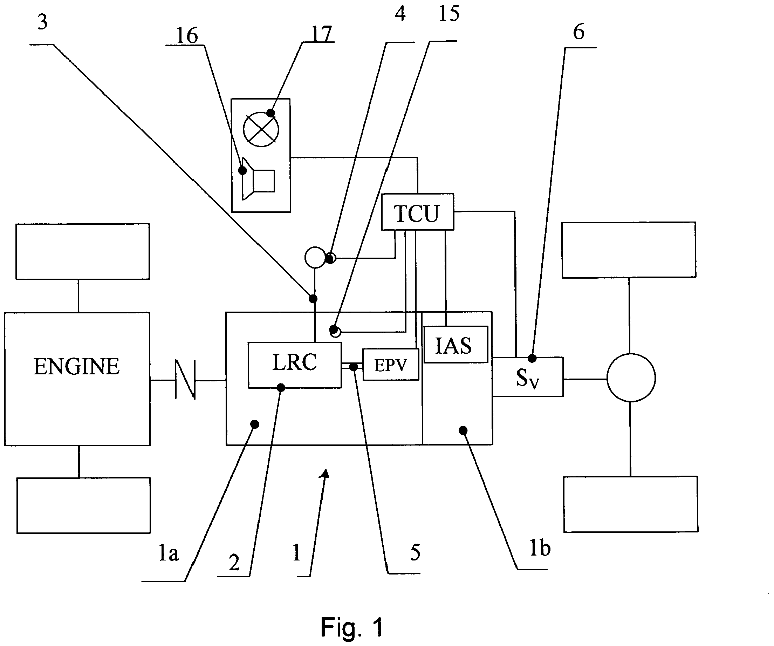

As it's schematically shown in Fig. 1, drivetrain of motor vehicle is equipped with a combustion engine that transfers power to the next section of the drivetrain by means of a typical friction clutch. The combustion engine is connected via friction clutch with a mechanical transmission 1, from which the drive is transferred using the main transmission in the live axle to road wheels of motor vehicle.

Power from the combustion engine must be transferred to road wheels depending on the current conditions of vehicle movement, with proper ratio that is provided by the mechanical transmission 1 with typical, known gears.

Depending on the purpose, such transmission 1 is equipped with a suitable number of ratios. In the case of motor vehicles such as for example trucks, transmissions with a lot of ratios are used in order to enable the proper matching of ratio to current demand for power on the vehicle wheels.

According to this embodiment of the invention, the transmission comprises a front module 1a equipped with 4 gears for driving forwards within low range of ratios and four gears for driving forwards within high range of ratios. Thus the transmission is equipped with 8 primary gears for driving forwards - gears 1, 2, 3 and 4 within the low range of ratios and gears 5, 6, 7 and 8 within the high range of ratios. According to this embodiment, transmission 1 is equipped with additional crawl gear for driving forwards and reverse gear.

The low and high range of ratios is realised by the rear module 1b which is a planetary gear that constitutes a common assembly with the transmission 1 that enables to obtain two ratios: direct ratio and reduction ratio. The reduction ratio realises the low range of ratios, i.e. gears 1, 2, 3 and 4 and the direct ratio realises the high range of ratios, i.e. gears 5, 6, 7 and 8.

To select proper ratio, the transmission 1 is equipped with device LRC for shift the gears 2. The gear shifting device 2 operates in "H" letter array, which means that between the position of gear 1-2 within the low range of ratios (5 - 6 within high range of ratios) and 3 - 4 within the low range of ratios (7 - 8 within high range of ratios) there is "an idle" position that extends perpendicularly with respect to the above mentioned positions of gear selection.

According to the above mentioned diagram of operation of the transmission 1, it thus comprises 4 pairs of gear wheels that provide the primary gears for driving forwards, and the low and high range of positions is realised by the planetary gear in the rear module 1b. In other words, gear 1 within the low range of ratios and gear 5 within the high range of ratios is realised by the same pair of gear wheels in the transmission 1, gears 2 and 6 are realised by the next pair and so one.

Selection of gear in the transmission is realised by the gear selection shaft 5 connected with the gear shift lever 3 operated by driver. Gear change lever 3 is equipped with preselective switch 4 that via electronic route transmits a signal to the electronic transmission control unit TCU, which will be discussed later in more detail.

The preselective switch 4 is used to set the planetary gear ratio in the rear module 1b and thus to select low range of gears for the increasing ratio of the planetary gear or high range of gears for direct ratio of the planetary gear.

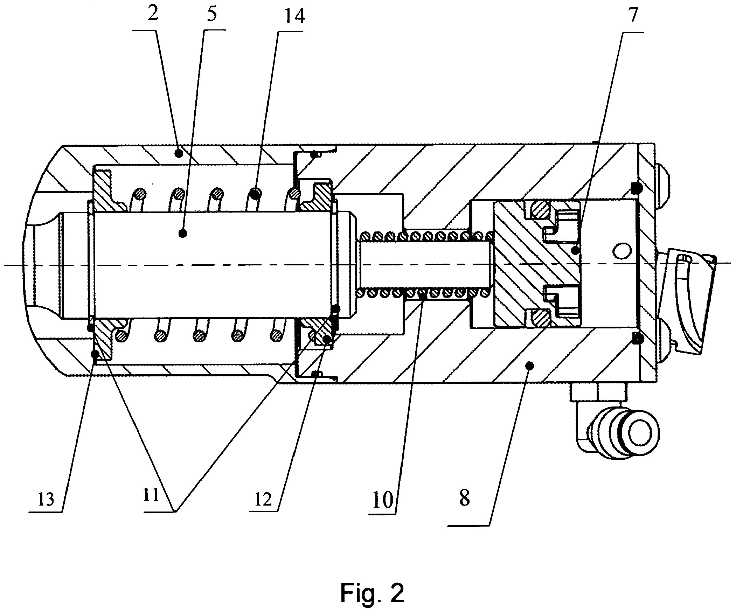

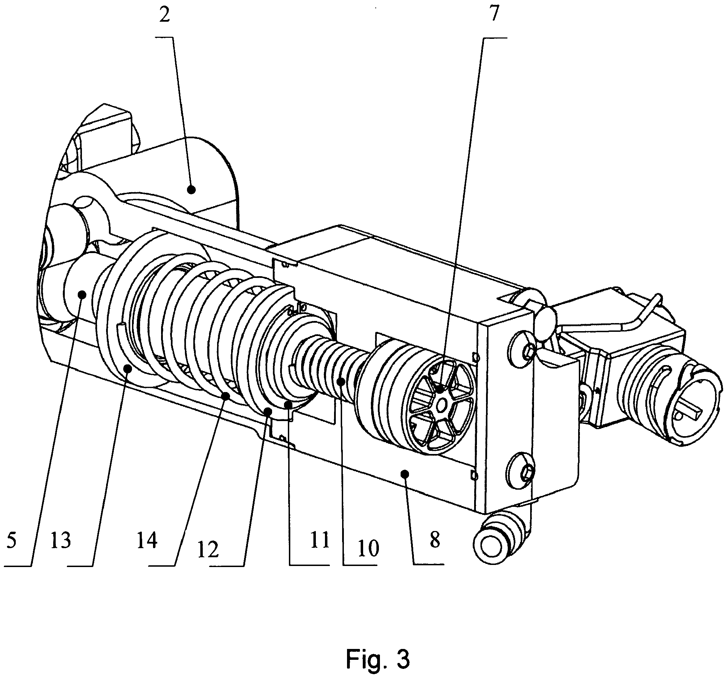

As shown in Fig. 2 and Fig. 3, in the transmission protection system 1 for motor vehicles, the gear selection shaft 5 in the device LRC for shifting the gears 2 is connected with an electro-pneumatic actuator EPV housed in the casing of the device LRC for shifting the gears 2. The transmission protection system 1 for motor vehicles is equipped with an electronic transmission control unit TCU 1 to which the signals of the plurality of parameters related to vehicle motion or present status of respective assemblies of the transmission 1 are transmitted. These signals include, among other things, current speed of vehicle that is shown by the speed sensor Sᵥ arranged on the transmission 1. The electronic transmission control unit TCU 1 is programmed with the values used to compare present parameters with these programmed data and respectively to the actual status of transmitting the signals to the elements of the transmission protection system 1 for motor vehicles. These programmed values include among other things the first assumed speed S₁, the second assumed speed S₂ or the assumed speed S_{z}.

The electro-pneumatic actuator EPV comprises a piston 7 housed in the casing 8 of the electro-pneumatic actuator EPV that is seated in the casing of the gear shifting device 2, and which is connected with the gear selection shaft 5 of the gear shifting device 2 of the transmission 1.

The gear selection shaft 5 from the side of the electro-pneumatic actuator EPV has a substantially smaller diameter, and within this section of the gear selection shaft 5 of smaller diameter, a damper spring 10 is seated.

On the wider section of the gear selection shaft 5, there are circlips 11 installed and between the circlips 11, the following elements are installed: from the side of the electro-pneumatic actuator EPV, sliding spring cup 12 and from the side of transmission 1, auxiliary spring cup 13. Between the sliding spring cup 12 and auxiliary spring cup 13 the main spring is installed 14, the sliding spring cup 12 and auxiliary spring cup 13 limiting the movement of the gear selection shaft 5 along the electro-pneumatic actuator EPV.

The electro-pneumatic actuator EPV is controlled by the electronic transmission control unit TCU 1 in such a manner, that as a result of comparing the vehicle speed Sᵥ and the first assumed speed S₁ for the low range of ratios or for the difference between the vehicle speed Sᵥ and the second assumed speed S₂ for the high range of ratios, it supplies the electro-pneumatic actuator EPV with air pressure from the vehicle pneumatic installation or not.

In case of too high speed of the vehicle to select a lower gear, for example from the fourth to first gear, what could lead to damage of the transmission 1, the electronic transmission control unit TCU 1 transmits the signal to the electro-pneumatic actuator EPV and pressure is supplied to the piston 7 arranged in the casing of the electro-pneumatic actuator EPV. Piston 7 is shifted towards the gear selection shaft 5. This leads to significant "hindering" of moving the gear selection shaft 5 by driver via the gear change lever 3. Throwing incorrect gear necessitates overcoming additional force on the piston 7 of the electro-pneumatic actuator EPV that results from the air pressure in the pneumatic installation. This force is a few times higher than in the case of absence of pressure in the electro-pneumatic actuator EPV.

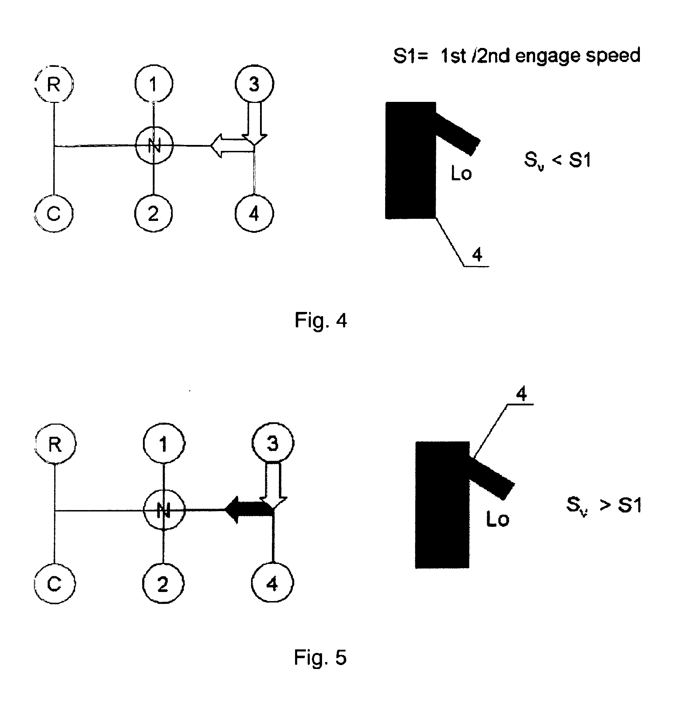

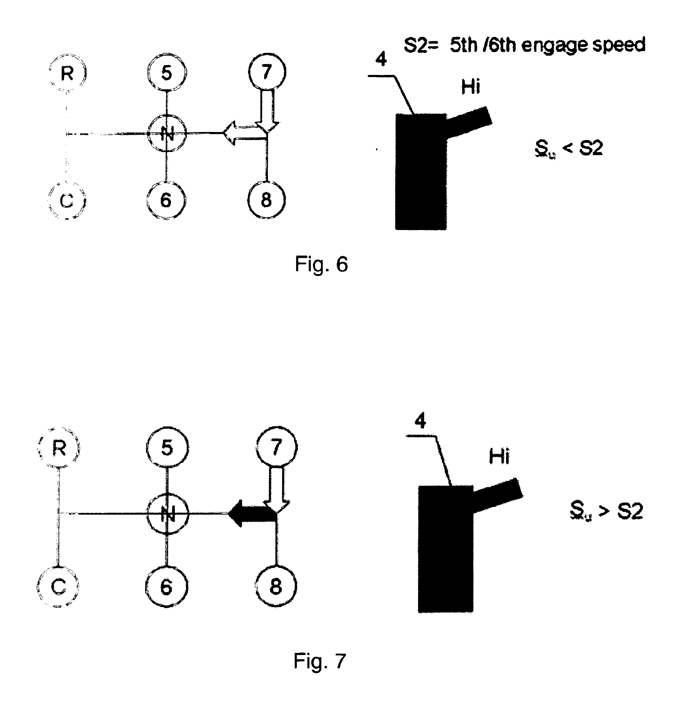

Accordingly, the situation for normal conditions is illustrated in Fig. 4 for low range of ratios, and in Fig. 6 for high range of ratios, wherein in case of vehicle speed Sᵥ lower than the first assumed speed S₁ while shifting the gear from 3 to 2 for the low range of ratios and S₂ while shifting the gear from 7 to 6 for the high range of ratios, the force of shifting from gear 3-4 position (7-8) to position 1-2 (5-6) is not increased and it results from the main spring 14 force in the electro-pneumatic actuator EPV.

Accordingly, the situation under abnormal conditions is illustrated in Fig. 5 for low range of ratios and in Fig. 7 for high range of ratio, wherein in the case of vehicle speed Sᵥ higher than the first assumed speed S₁ while shifting the gear from 3 to 2 for the low range of ratios and S₂ while shifting the gear from 7 to 6 for the high range of ratios, the force of shifting from gear 3-4 position (7-8) to position 1-2 (5-6) is a few times increased and it results from the main spring 14 force and the air pressure from the pneumatic installation in the electro-pneumatic actuator EPV.

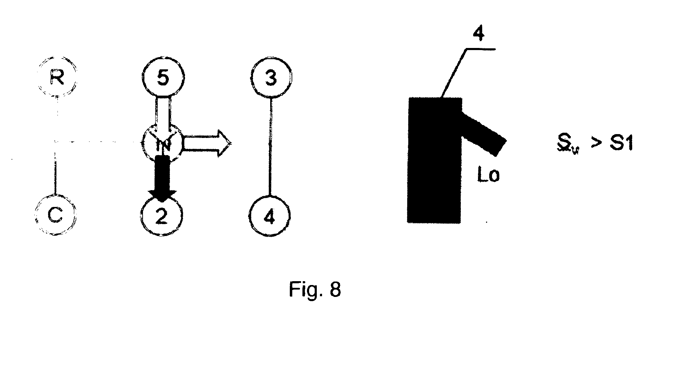

Fig. 8 illustrates the situation, when the driver would like to shift directly the gear from 5 within the high range of ratios to 2 within the low range of ratios using the preselective switch 4 at the vehicle speed Sᵥ higher than the assumed speed S₁. In this situation, increased force of the electro-pneumatic actuator EPV will cause the gear selection shaft 5 to be pushed into the position of gears 3-4 within the low range of ratios.

The transmission is equipped with the position sensor of the preselective switch 15 for selecting low or high range of ratios, as it is shown in Fig. 1, the transmission control unit TCU being connected with the position sensor 15 of the preselective switch 4, and depending on the position of this switch and the difference between the vehicle speed Sᵥ and the first assumed speed S₁ or the second assumed speed S₂, controls the position of the electro-pneumatic actuator EPV.

According to another aspect of the invention, the electronic transmission control unit TCU for the transmission protection system 1 for motor vehicles is shown, wherein the transmission 1 is equipped with low range of ratios and high range of ratios and comprises the device for shifting the gears 2 operating in "H" letter array. The selection of gear is realised by means of the gear selection shaft 5 connected with the gear change lever 3 equipped with the preselective switch 4 to select low or high range of ratios, and the low range of ratios comprises at least four ratios 1, 2, 3, 4 and the high range of ratios comprises at least four ratios 5, 6, 7 and 8.

The transmission is equipped with pneumatic installation used to select the range of ratios by means of the preselective switch 4 and vehicle speed sensor 6, as well as position sensor of the preselective switch 15 for selecting the low or high range of ratios, idle gear sensor (not shown) and reverse gear sensor (not shown).

The transmission control unit TCU is connected with the vehicle speed sensor 6 and the transmission is equipped with the electro-pneumatic actuator EPV that acts axially on the gear selection shaft 5, the position of the electro-pneumatic actuator EPV being controlled by the electronic transmission control unit TCU depending on the difference between the vehicle speed Sᵥ and the first assumed speed S₁ for the low range of ratios or the difference between the vehicle speed Sᵥ and the second assumed speed S₂ for the high range of ratios, as it as mentioned above.

The transmission control unit TCU is connected with a sound 16 and light 17 signalling device, that is activated in case of a try of selecting a ratio for the vehicle speed Sᵥ that exceeds the first assumed speed S_{z}. This is an additional protection and warning in case when driver would like to shift the ratio to low at the vehicles speed Sᵥ exceeding the assumed speed S_{z}.

Transmission control unit TCU is connected with the gear range switch sensor 4, idle gear sensor and reverse gear sensor and displays a signal about current position of the gear range or idle gear or neutral position on dashboard of a vehicle. Displaying this information is preceded with performing full analysis of current situation by the transmission control unit TCU what in an significant manner assists the driver in taking the decision concerning further procedure.

It is obvious for one of ordinary skill in the art, that the invention is not limited to the embodiments presented herein and can be modified according to the claims.

In the present description, specific terms were used to define particular elements of the system, however these are used only for general and descriptive purposes and they are not limiting.

## Claims

1. A transmission protection system (1) for motor vehicles equipped with low range of ratios and high range of ratios, comprising a device for shifting gears LCR (2) operating in "H" letter array, wherein the selection of gear is realised by means of the gear selection shaft (5) connected with the gear change lever (3) equipped with the preselective switch (4) to select low or high range of ratios, and the low range of ratios is equipped with at least four ratios 1, 2, 3, 4 and the high range of ratios is equipped with at least four ratios 5, 6, 7 and 8, the transmission being equipped with pneumatic installation used to select the ratios range by means of the preselective switch and vehicle speed sensor (6), **characterized in that** the gear selection shaft (5) is connected to the electro-pneumatic actuator EPV acting axially on the gear selection shaft (5) so that it counteracts accidental positioning of the gear selection shaft (5) in position of the gears 1-2 within the low range of ratios or in position of the gears 5-6 within the high range of ratios, and the electro-pneumatic actuator EPV is controlled by means of the electronic transmission control unit TCU depending on the difference between the vehicle speed Sᵥ and the first assumed speed S₁ for the low range of ratios of the difference between the vehicle speed Sᵥ and the second assumed speed S₂ for the high range of ratios.

2. The transmission protection system according to claim 1, **characterized in that** the transmission (1) is equipped with a valve for blocking the change of range IAS, that is controlled, depending on the position of the preselective switch (4) selecting the low or high range of ratios, by means of the transmission control unit TCU depending on the difference between the vehicle speed Sᵥ and the assumed speed S_{z}.

3. The transmission protection system according to claim 1, **characterized in that** the electro-pneumatic actuator EPV comprising the piston (7) housed in the casing (8) of the electro-pneumatic actuator EPV is seated in the casing of the gear shifting device LRC (2), which is connected with the gear selection shaft (5) of the gear shifting device (2) of the transmission (1).

4. The transmission protection system according to claim 3, **characterized in that** the gear selection shaft (5) from the side of the electro-pneumatic actuator EPV has substantially smaller diameter, and within this section of the gear selection shaft (5) of smaller diameter, damper spring (10) is seated.

5. The transmission protection system according to claim 4, **characterized in that** on the wider section of the gear selection shaft (5), there are circlips (11) installed and between the circlips (11), the following elements are installed: from the side of the electro-pneumatic actuator EPV, sliding spring cup (12) and from the side of transmission (1), auxiliary spring cup (13), between the sliding spring cup (12) and auxiliary spring cup (13) the main spring being installed (14), the sliding spring cup (12) and auxiliary spring cup (13) limiting the movement of the gear selection shaft (5) along the electro-pneumatic actuator EPV.

6. The transmission protection system according to claim 1, **characterized in that** the transmission is equipped with a position sensor (15) of the preselective switch for selecting low or high range of ratios, the transmission control unit TCU being connected with the position sensor (15) of the preselective switch (4) and, depending on the position of such switch and the difference between the vehicle speed Sᵥ and the first assumed speed S₁ or the second assumed speed S₂, controls the position of the electro-pneumatic actuator EPV.

7. An electronic transmission control unit TCU for the transmission protection system (1) for motor vehicles, wherein the transmission (1) is equipped with low range of ratios and high range of ratios and comprises the device for shifting the gears (2) operating in "H" letter array, wherein the selection of gear is realised by means of the gear selection shaft (5) connected with the gear change lever (3) equipped with the preselective switch (4) to select low or high range of ratios, and the low range of ratios comprises at least four ratios 1, 2, 3, 4 and the high range of ratios comprises at least four ratios 5, 6, 7 and 8, the transmission being equipped with pneumatic installation used to select the range of ratios by means of the preselective switch and vehicle speed sensor (6), **characterized in that** the transmission control unit TCU is connected with the vehicle speed sensor (6) and the transmission is equipped with the electro-pneumatic actuator EPV acting axially on the gear selection shaft (5), the electro-pneumatic actuator EPV being controlled by means of the electronic transmission control unit TCU depending on the difference between the vehicle speed Sᵥ and the first assumed speed S₁ for the low range of ratios or the difference between the vehicle speed Sᵥ and the second assumed speed S₂ for the high range of ratios.

8. The transmission control unit TCU according to claim 6, the transmission being equipped with a position sensor (15) of the preselective switch for selecting low or high range of ratios, the transmission control unit TCU being connected with the position sensor (15) of the preselective switch (4) and, depending on the position of such switch and the difference between the vehicle speed Sᵥ and the first assumed speed S₁ or the second assumed speed S₂, controls the position of the electro-pneumatic actuator EPV.

9. The transmission control unit TCU according to claim 6 or 7, **characterized in that** it is connected with a sound signalling device (16) and/or light signalling device (17) that is activated in case of selecting a ratio for the vehicle speed Sᵥ that exceeds the first assumed speed S_{z}.

10. The transmission control unit TCU according to claim 6 or 7 or 8, **characterized in that** the transmission is equipped with a valve for blocking the change of range IAS and the transmission control unit TCU controls the valve for blocking the change of range IAS depending on the signals received from the sensor (15) of the preselective switch and on the difference between the vehicle speed Sᵥ and the assumed speed S_{z}.

11. The transmission control unit TCU according to claim 6, **characterized in that** it is connected with the gear range switch sensor (4), idle gear sensor and reverse gear sensor and displays a signal about current position of the gear range or idle gear or neutral position on dashboard of a vehicle.
